# EUROPEAN PATENT APPLICATION

(11) **EP 3 790 270 A1**
(43) Date of publication of application: **10.03.2021**
(21) Application number: 19796140.2
(22) Date of filing: 13.02.2019
(51) Int. Cl.: H04N 5/74, G09G 5/00, G09G 5/36

(54) **INFORMATION PROCESSING DEVICE, INFORMATION PROCESSING METHOD, AND RECORDING MEDIUM**

(30) Priority: 01.05.2018 JP 2018088134
(71) Applicant: Sony Corporation, 108-0075 Tokyo (JP)
(72) Inventor: AOKI, Yu, Tokyo 108-0075 (JP); IIDA, Fumihiko, Tokyo 108-0075 (JP); IKEDA, Takuya, Tokyo 108-0075 (JP); IDA, Kentaro, Tokyo 108-0075 (JP)
(74) Representative: 2SPL Patentanwälte PartG mbB
(86) International application number: PCT/JP2019/005108
(87) International publication number: WO 2019/211936

(57) **Abstract**

Provided is an information processing device that can enhance the visibility of content while a projection region is being moved.

An information processing device includes a projection control unit configured to decide a projection region in accordance with whether or not a projection device is in an operation mode of moving a projection region in which content is to be projected, on the basis of space information regarding a space in which the projection device can project the content, and control projection processing of the content in the decided projection region.

## Description

### TECHNICAL FIELD

The present disclosure relates to an information processing device, an information processing method, and a recording medium.

### BACKGROUND ART

In recent years, downsizing and higher luminance of a projector have been promoted. Because usage cases of projectors have been accordingly diversified, the consideration of a projector that can change a projection direction by driving has been promoted.

With regard to this, Patent Document 1 described below discloses a technology related to control of video display processing performed by a drive type projector. In the technology, for example, display processing in displaying a video by the drive type projector with being superimposed on a video being displayed by a fixed type projector is controlled. Furthermore, in the technology, drive processing in moving a video being displayed by the drive type projector is controlled. Therefore, a display effect of an overlap portion of the videos being displayed by the both projectors, and a display effect caused by the movement of the video are enhanced.

### CITATION LIST

### PATENT DOCUMENT

Patent Document 1: WO 2017/154609 A

### SUMMARY OF THE INVENTION

### PROBLEMS TO BE SOLVED BY THE INVENTION

However, in the above-described technology, while the visibility of a video before and after the switching of a projector that displays a video, and before and after the movement of a video is considered, the visibility of a video during the movement is not considered.

In view of the foregoing, the present disclosure proposes an information processing device, an information processing method, and a recording medium that are novel and improved, and can further enhance the visibility of content while a projection region is being moved.

### SOLUTIONS TO PROBLEMS

According to the present disclosure, an information processing device including a projection control unit configured to decide a projection region in accordance with whether or not a projection device is in an operation mode of moving a projection region in which content is to be projected, on the basis of space information regarding a space in which the projection device can project the content, and control projection processing of the content in the decided projection region is provided.

Furthermore, according to the present disclosure, an information processing method executed by a processor, including deciding a projection region in accordance with whether or not a projection device is in an operation mode of moving a projection region in which content is to be projected, on the basis of space information regarding a space in which the projection device can project the content, and controlling projection processing of the content in the decided projection region is provided.

Furthermore, according to the present disclosure, a recording medium recording a program for causing a computer to function as a projection control unit configured to decide a projection region in accordance with whether or not a projection device is in an operation mode of moving a projection region in which content is to be projected, on the basis of space information regarding a space in which the projection device can project the content, and control projection processing of the content in the decided projection region is provided.

### EFFECTS OF THE INVENTION

As described above, according to the present disclosure, the visibility of content while a projection region is being moved can be further enhanced.

Note that the above-described effect is not always limitative, and together with the above-described effect or in place of the above-described effect, any of the effects described in this specification, or other effects recognized from this specification may be caused.

### BRIEF DESCRIPTION OF DRAWINGS

Fig. 1 is an explanatory diagram illustrating an overview of an information processing system according to an embodiment of the present disclosure.
Fig. 2 is a block diagram illustrating a configuration example of the information processing system according to the embodiment.
Fig. 3 is an explanatory diagram illustrating display processing of content that is performed by a display device according to the embodiment.
Fig. 4 is an explanatory diagram illustrating projection processing of content that avoids the display device according to the embodiment.
Fig. 5 is a flowchart illustrating an operation example of the information processing system according to the embodiment.
Fig. 6 is an explanatory diagram illustrating movement control of content according to the embodiment.
Fig. 7 is an explanatory diagram illustrating size control of content according to the embodiment.
Fig. 8 is an explanatory diagram illustrating movement control of a projection region according to the embodiment.
Fig. 9 is an explanatory diagram illustrating movement control of content between partial regions according to the embodiment.
Fig. 10 is an explanatory diagram illustrating sizes of a projection region before and after the movement according to the embodiment.
Fig. 11 is an explanatory diagram illustrating movement of a projection region in the same size according to the embodiment.
Fig. 12 is an explanatory diagram illustrating an object representing the movement of a projection region according to the embodiment.
Fig. 13 is an explanatory diagram illustrating projection in which the resolution of content declines according to the embodiment.
Fig. 14 is an explanatory diagram illustrating handover of projection of content according to the embodiment.
Fig. 15 is an explanatory diagram illustrating sizes of a projection region before and after the movement according to the embodiment.
Fig. 16 is an explanatory diagram illustrating a change in luminance and color of content according to the embodiment.
Fig. 17 is an explanatory diagram illustrating partial display of a projection region according to the embodiment.
Fig. 18 is an explanatory diagram illustrating information regarding a projection region 50 when a projection direction is changed using a pointing device according to the embodiment.
Fig. 19 is an explanatory diagram illustrating information regarding a projection region when a projection direction is manually changed according to the embodiment.
Fig. 20 is a block diagram illustrating a hardware configuration example of an information processing server according to the embodiment.

### MODE FOR CARRYING OUT THE INVENTION

Hereinafter, a preferred embodiment of the present disclosure will be described in detail with reference to the attached drawings. Note that, in this specification and the drawings, the redundant description will be omitted by allocating the same reference numerals to the components having substantially the same functional configuration.

Note that the description will be given in the following order.
1. Embodiment of Present Disclosure
1.1. Overview
1.2. Functional Configuration Example
1.3. Operation Example
2. Modified Example
3. Hardware Configuration Example
4. Conclusion

### <<1. Embodiment of Present Disclosure>>

### <1.1. Overview>

In recent years, downsizing and higher luminance of a projector have been promoted. The convenience of a projector has been accordingly getting better and better irrespective of whether the projector is intended for general consumers or for business purposes. For example, owing to the downsizing of a projector, a user can easily move the projector, and can use the projector in various locations. Furthermore, owing to the higher luminance of a projector, content and the like are projected more brightly as compared with a conventional projector.

In addition to the above-described downsizing and higher luminance, a projector that can change a projection direction by driving is considered. A drive type projector can project content or the like in an arbitrary direction within a space in which the projector is installed.

However, in the drive type projector, while the visibility of a video before and after the movement of the video is considered, the visibility of a video during the movement is not considered. Depending on the content to be projected by the drive type projector, in some cases, content being projected while a projection direction is being moved might be desired to be presented to a user.

A technology according to an embodiment of the present disclosure has been conceived by focusing attention on the above-described points, and the present disclosure proposes a technology that can further enhance the visibility of content while a projection region is being moved by a projector that can dynamically change a projection direction.

While the projector that can dynamically change a projection direction is changing a projection direction, a projection state of content intermittently changes. For example, by changing a projection direction, a projection region extends over a plurality of surfaces in some cases. While the projection region is extending over a plurality of surfaces, content is also projected over a plurality of surfaces, and the visibility of the content is greatly affected. In view of the foregoing, in an embodiment of the present disclosure, an information processing device controls projection processing of content on the basis of space information of a projection direction.

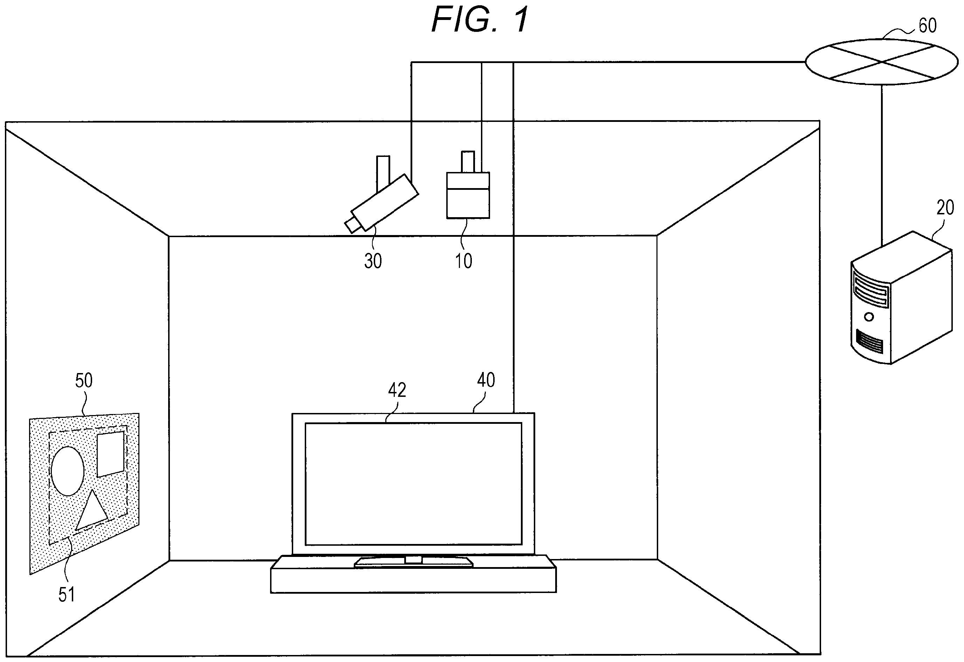

Hereinafter, an overview of an information processing system according to an embodiment of the present disclosure will be described with reference to Fig. 1. Fig. 1 is an explanatory diagram illustrating an overview of an information processing system according to an embodiment of the present disclosure. For realizing the above-described technology, as illustrated in Fig. 1, the information processing system according to an embodiment of the present disclosure includes a sensor device 10, an information processing server 20, a projection device 30, and a display device 40.

Note that, in an embodiment of the present disclosure, a region in which content 51 is projected by the projection device 30 will be referred to as a projection region 50. The projection region may extend over a plurality of surfaces. In a case where the projection region extends over a plurality of surfaces, the projection region is divided into regions corresponding to the number of the surfaces. Each of a plurality of regions generated by dividing the projection region will be referred to as a partial region. A normal direction at an arbitrary position in a partial region falls within a predetermined range. For example, in a plurality of regions generated by dividing a projection region, even if the respective angles formed by normal directions at a plurality of positions in each region, and the projection direction of the projection device 30 are different, when the angles fall within the predetermined range, such regions are treated as partial regions.

Furthermore, a direction in which the content 51 is projected will be referred to as a projection direction. Note that the projection direction may be an optical axis direction of a projector. A change in a projection direction is the same as the movement of a projection region. Furthermore, a region in which the display device 40 displays the content 51 will be referred to as a display region 42.

The sensor device 10 is a device that acquires sensing data. The sensor device 10 is installed in the same space as the projection device 30, and acquires distance information regarding the space, as sensing data. The distance information indicates a distance to a wall surface in the space, a distance to an object, and the like, for example.

The information processing server 20 is an information processing device that controls processing of each component included in the information processing system. For example, the information processing server 20 controls acquisition processing of sensing data that is performed by the sensor device 10. Furthermore, the information processing server 20 controls projection processing of content that is performed by the projection device 30. Furthermore, the information processing server 20 controls display processing of content that is performed by the display device 40.

The projection device 30 is a device that projects content. Examples of the projection device 30 include a drive type projector. The display device 40 is a device that displays content. Examples of the display device 40 include a display.

Note that the information processing server 20 is connected with the sensor device 10, the projection device 30, and the display device 40 by an arbitrary communication method. For example, the information processing server 20 is connected with the sensor device 10, the projection device 30, and the display device 40 via wired communication or wireless communication, and performs communication via a network 60. Furthermore, the information processing server 20 may be configured to directly perform communication with the sensor device 10, the projection device 30, and the display device 40.

Note that the information processing server 20 may be installed in the same space as the sensor device 10, the projection device 30, and the display device 40.

Furthermore, the functions of the sensor device 10 and the projection device 30 may be implemented by one device. Furthermore, the functions of the sensor device 10, the information processing server 20, and the projection device 30 may be implemented by one device. Furthermore, the functions of the sensor device 10 and the display device 40 may be implemented by one device. Furthermore, the functions of the sensor device 10, the information processing server 20, and the display device 40 may be implemented by one device. Furthermore, the functions of the information processing server 20 may be included in at least any of the sensor device 10, the projection device 30, or the display device 40, or may be included in each of the devices.

Heretofore, an overview of an information processing system according to an embodiment of the present disclosure has been described with reference to Fig. 1. Subsequently, a configuration example of the information processing system according to an embodiment of the present disclosure will be described.

### <1.2. Functional Configuration Example>

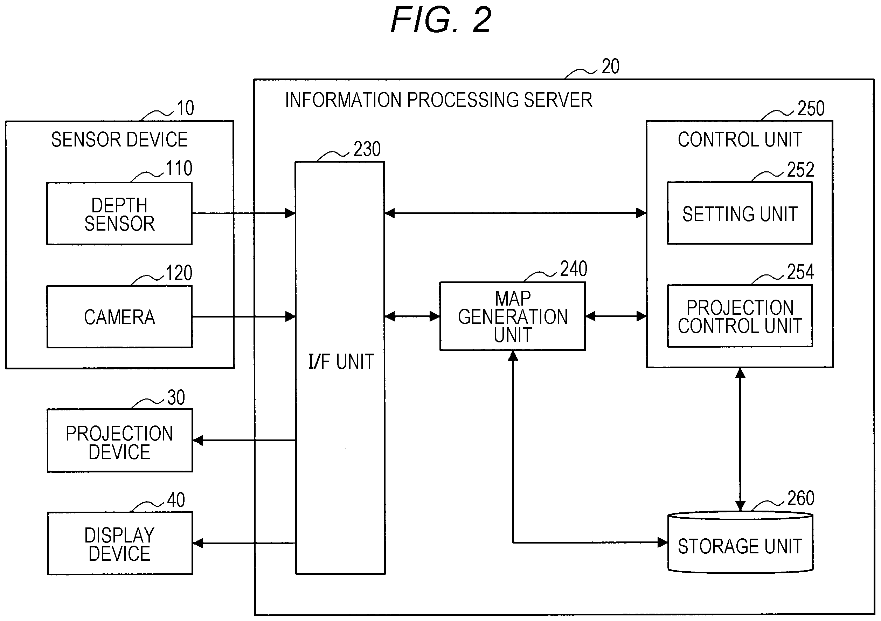

Hereinafter, a configuration example of the information processing system according to an embodiment of the present disclosure will be described with reference to Figs. 2 to 4. Fig. 2 is a block diagram illustrating a configuration example of the information processing system according to an embodiment of the present disclosure.

### (1) Sensor Device 10

The sensor device 10 includes a function of acquiring sensing data. For example, the sensor device 10 is installed in the same space as the projection device 30, and acquires a distance to a wall surface in the space, and a distance to a piece of furniture installed in the space, as sensing data. After acquiring sensing data, the sensor device 10 transmits the sensing data to the information processing server 20.

For implementing the above-described functions, the sensor device 10 according to an embodiment of the present disclosure includes a depth sensor 110 and a camera 120, for example. Note that devices included in the sensor device 10 for acquiring sensing data are not limited to the depth sensor 110 and the camera 120, and an arbitrary device may be included. Furthermore, an installation location of the sensor device 10 and the number of installed sensor devices 10 in a certain space are not specifically limited, and an arbitrary number of sensor devices 10 may be installed at an arbitrary location.

### • Depth Sensor 110

The depth sensor 110 is a device that acquires depth information. The depth sensor 110 is a distance measuring device of an infrared ray method or an ultrasound method, for example. Furthermore, the depth sensor 110 may be a laser range finder (LRF), a laser imaging detection and ranging (LIDAR), or a distance measuring device of a stereo camera or the like. Note that the type of a distance measuring device used as the depth sensor 110 is not limited to the above-described examples, and a distance measuring device of an arbitrary type may be used. After acquiring depth information, the depth sensor 110 transmits the depth information to the information processing server 20 as sensing data.

### • Camera 120

The camera 120 is a device that captures an image (still image/moving image). The camera 120 is an imaging device such as an RGB camera or a thermocamera, for example, and includes a lens system, a drive system, and an image sensor. After capturing an image, the camera 120 transmits the image to the information processing server 20 as sensing data. Note that the type of an imaging device used as the camera 120 is not limited to the above-described examples, and an imaging device of an arbitrary type may be used.

### (2) Information Processing Server 20

The information processing server 20 is an information processing device including a function of controlling processing of each component included in the information processing system. For implementing the functions, as illustrated in Fig. 2, the information processing server 20 according to an embodiment of the present disclosure includes an interface (I/F) unit 230, a map generation unit 240, a control unit 250, and a storage unit 260.

### (I/F Unit 230)

The I/F unit 230 is a connection device for connecting the information processing server 20 and another device. The I/F unit 230 is implemented by a communication device, for example. The I/F unit 230 can perform transmission and reception of information with components of the sensor device 10, the projection device 30, and the display device 40 that are connected by the communication device. Note that, as a communication method of the I/F unit 230, an arbitrary wired or wireless communication method may be used. Furthermore, the I/F unit 230 may change a communication method in accordance with a communication target. Furthermore, the I/F unit 230 may be configured to directly communicate with each communication target, or may be configured to communicate with each communication target via a network or the like.

Furthermore, the I/F unit 230 may be implemented by a connector such as a universal serial bus (USB) connector. The I/F unit 230 can perform input and output of information with components of the sensor device 10, the projection device 30, and the display device 40 that are connected by the USB connector.

The I/F unit 230 outputs sensing data input from the sensor device 10, for example, to the map generation unit 240 or the control unit 250. Furthermore, the I/F unit 230 outputs an instruction regarding projection processing of content that has been input from the control unit 250, to the projection device 30. Furthermore, the I/F unit 230 outputs an instruction regarding display processing of content that has been input from the control unit 250, to the display device 40.

### (Map Generation Unit 240)

The map generation unit 240 includes a function of performing so-called space recognition such as map generation in a space and the recognition of an object, on the basis of sensing data detected by the sensor device 10. Specifically, on the basis of sensing data acquired by the sensor device 10, the map generation unit 240 generates space information indicating the shape of a space or the shape of an object forming a space, such as a wall surface, a ceiling, a floor, a door, a piece of furniture, and livingware, a position of the object, and the like. Then, the map generation unit 240 outputs the generated space information to the control unit 250. Furthermore, the map generation unit 240 may output the generated space information to the storage unit 260, and cause the storage unit 260 to store the space information.

The map generation unit 240 can recognize a living space on the basis of sensing data detected by the sensor device 10 installed at every location in the living space, for example. For example, on the basis of the sensing data, the map generation unit 240 can recognize an entrance, a passageway, a kitchen, a living room, a dining room, a study room, a bed room, a bathroom, a washroom, a balcony, or the like. Furthermore, on the basis of the sensing data, the map generation unit 240 can generate space information obtained by mapping the arrangement of objects in each room.

### (Control Unit 250)

The control unit 250 has a function for controlling all operations of the information processing server 20. For example, the control unit 250 includes a function related to the information processing server 20 controlling sensing processing of the sensor device 10. Furthermore, the control unit 250 includes a function related to the information processing server 20 controlling projection processing of the projection device 30. Furthermore, the control unit 250 includes a function related to the information processing server 20 controlling display processing of the display device 40.

For implementing the above-described functions, as illustrated in Fig. 2, the control unit 250 according to an embodiment of the present disclosure includes a setting unit 252 and a projection control unit 254.

### • Setting Unit 252

The setting unit 252 includes a function of setting an operation mode of the projection device 30. The operation mode includes two modes including a drive mode being a mode in which the projection device 30 is driven, and a non-drive mode being a mode in which the projection device is not driven. In a case where an operation mode is the drive mode, by being driven and changing a projection direction, the projection device 30 can move the projection region 50. Furthermore, in a case where an operation mode is the non-drive mode, because the projection device 30 is not driven, the projection device 30 projects content in a fixed direction without changing a projection direction and without moving the projection region 50.

The setting unit 252 sets an operation mode on the basis of an instruction from the user, for example. Furthermore, the setting unit 252 may set an operation mode on the basis of an instruction from an application. Furthermore, the setting unit 252 may set an operation mode on the basis of space information.

### • Projection Control Unit 254

The projection control unit 254 includes a function of controlling sensing processing of the sensor device 10. For example, at a timing at which the sensor device 10 is installed in a certain space, the projection control unit 254 causes the sensor device 10 to sense the space and acquire sensing data. Furthermore, the projection control unit 254 may cause the sensor device 10 to sense the space every time a predetermined time elapses. Furthermore, the projection control unit 254 may cause the sensor device 10 to sequentially sense the space while the projection device 30 is moving the projection region 50.

Furthermore, the projection control unit 254 may cause the sensor device 10 to sense the entire space, or may cause the sensor device 10 to sense a part of the space (for example, only a space in the projection direction).

Furthermore, the projection control unit 254 includes a function of controlling projection processing of the projection device 30. For example, the projection control unit 254 controls processing of changing a projection direction of content to be projected by the projection device 30, on the basis of an input instruction and space information. Here, the input instruction is an instruction input by the user using a pointing device or the like, an instruction input by an application or the like, or the like.

When an instruction indicating that a projection direction is to be changed is input, the projection control unit 254 detects candidates of the projection region 50 and candidates of the display device 40 on the basis of space information. The projection control unit 254 sets an evaluation value (hereinafter, will also be referred to as a suitability degree) for each of the detected candidates of the projection region 50 and the detected candidates of the display device 40. On the basis of the evaluation value, the projection control unit 254 selects one candidate from among the candidates of the projection region 50 and the candidates of the display device 40, and decides the selected candidate as the projection region 50 or the display device 40.

Here, the setting of an evaluation value will be specifically described. For the projection region 50, two evaluation values are set from the viewpoint of a projection direction and the viewpoint of visibility. For the display device 40, one evaluation value is set from the viewpoint of a size of the display region 42.

From the viewpoint of a projection direction of the projection region 50, the projection control unit 254 sets an evaluation value on the basis of a normal direction of the projection region 50. For example, the projection control unit 254 obtains a relative relationship between the projection device 30 and the projection region 50 on the basis of the projection direction and the normal direction of the projection region 50. Specifically, the projection control unit 254 calculates a coincidence degree between vectors of the projection direction and the normal direction. Because the projection region 50 having the higher coincidence degree is more suitable as the projection region 50 in which content is projected, a higher evaluation value is set. Note that, for a candidate including partial regions among the candidates of the projection region 50, a coincidence degree between the normal direction and the projection direction of each of the partial regions is calculated, and an evaluation value is set for each of the partial regions.

From the viewpoint of visibility of the projection region 50, the projection control unit 254 sets an evaluation value on the basis of the visibility of content that is obtainable when the content is projected to fall within the projection region 50. For example, when content is projected to fall within the projection region 50, because the projection region 50 having higher visibility of content is more suitable as the projection region 50 in which content is projected, a higher evaluation value is set. Note that, for a candidate including partial regions among the candidates of the projection region 50, an evaluation value is set for each of the partial regions on the basis of the visibility of content that is obtainable when the content is projected to fall within each of the partial regions.

From the viewpoint of a size of the display region 42 of the display device 40, the projection control unit 254 sets an evaluation value on the basis of the visibility of content that is obtainable when the content is displayed to fall within the display region 42, similarly to the viewpoint of the visibility of the projection region 50. For example, when content is displayed to fall within the display region 42, because the display device 40 having higher visibility of the content is more suitable as the display device 40 that displays content, a higher evaluation value is set.

Then, the projection control unit 254 selects the projection region 50 more suitable for the projection of content on the basis of two evaluation values set for each of the candidates of the projection region 50. Furthermore, the projection control unit 254 selects the display device 40 more suitable for the display of content on the basis of an evaluation value set for each of the candidates of the display device 40. Note that the projection control unit 254 typically controls projection processing in such a manner as to project content in the projection region 50 selected from among the candidates of the projection region 50. In a case where the selected display device 40 exists near the projection region 50, the projection control unit 254 controls display processing in such a manner as to cause the display device 40 to display content. Furthermore, the projection control unit 254 may control display processing in such a manner as to cause the display device 40 to display content without moving the projection region 50. Note that the projection control unit 254 needs not always display content in the selected display device 40. For example, in a case where the selected display device 40 exists near the projection region 50, the projection control unit 254 may control projection processing in such a manner as to move the projection region 50 to avoid the display device 40, without displaying content in the display device 40.

Furthermore, the projection control unit 254 includes a function of deciding a projection effect of the projection region 50 while the projection region 50 is being moved, and controlling projection processing. Here, the projection effect refers to a change to be added to a state of when the projection region 50 is being moved. For example, the projection control unit 254 detects other projection regions 50 different from the movement destination projection region 50, on the basis of space information. Then, the projection control unit 254 may decide the most appropriate projection region 50 from among the other projection regions 50, and treat the decided projection region 50 as a new movement destination projection region 50. Furthermore, the projection control unit 254 may change a size of the projection region 50 on the basis of space information. Furthermore, the projection control unit 254 may move the projection region 50 while adding animation representation, on the basis of space information.

Furthermore, the projection control unit 254 may decide a display effect obtainable when the display device 40 displays content, and control display processing. Here, the display effect refers to a change to be added to a state of when the display device 40 displays content. For example, the projection control unit 254 may change a display size of content in accordance with the size of the display region 42. Furthermore, in a case where content is displayed in the display device 40 existing on a movement route of the projection region 50, the projection control unit 254 may move the content within the display region 42 in accordance with the driving of the projection device 30.

Furthermore, the projection control unit 254 includes a function of controlling display processing of the display device 40. For example, in a case where the display device 40 exists in the same space, the projection control unit 254 may cause the display device 40 to display content. For example, in a case where the display device 40 exists on the movement route of the projection region 50, the projection control unit 254 may control projection processing of the projection device 30 and cause the display device 40 to display content, in accordance with the state of the display device 40.

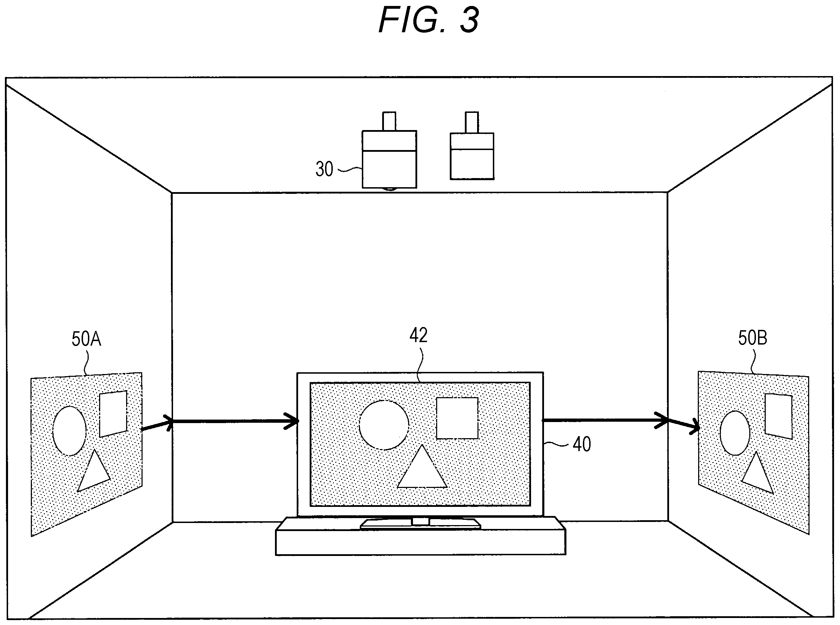

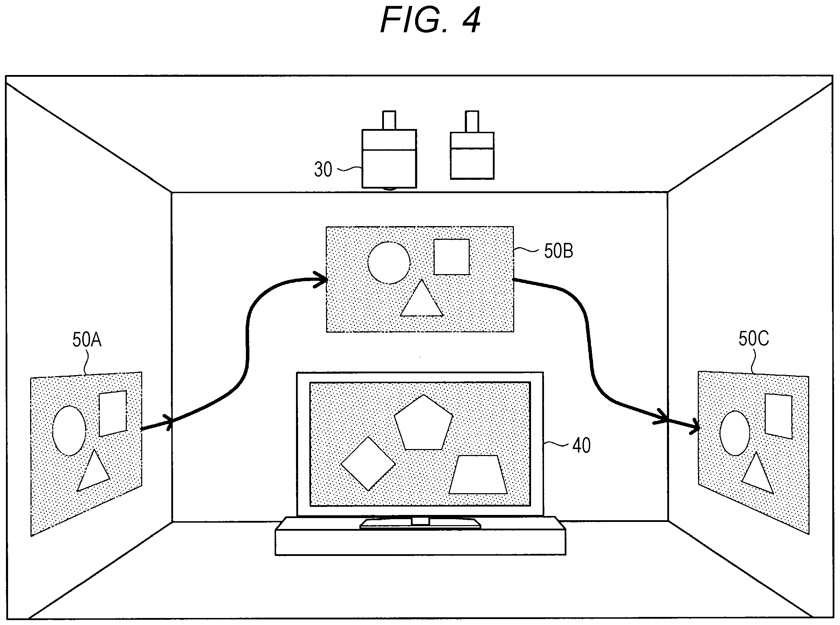

Hereinafter, as an example of control performed by the projection control unit 254, the control of projection processing that is performed in a case where the display device 40 exists on the movement route of the projection region 50 will be specifically described with reference to Figs. 3 and 4. Fig. 3 is an explanatory diagram illustrating display processing of content that is performed by the display device 40 according to an embodiment of the present disclosure. Fig. 4 is an explanatory diagram illustrating projection processing of content that avoids the display device 40 according to an embodiment of the present disclosure.

In a case where the display device 40 that displays content exists on the movement route of the projection region, the projection control unit 254 controls projection processing of content in accordance with the state of the display device 40. For example, in a case where the display device 40 is in a content displayable state, the projection control unit 254 stops the projection of content that is performed by the projection device 30, and causes the display device 40 to display content.

Here, the displayable state refers to a state in which the display device 40 is not used, for example. Furthermore, the projection control unit 254 may regard a case where content being displayed on the display device 40 may be switched even if the display device 40 is used, as the displayable state. Furthermore, the projection control unit 254 may also regard a case where the same user uses the projection device 30 and the display device 40, as the displayable state. As described above, the projection control unit 254 determines a displayable state on the basis of a usage state of the display device 40, content being displayed on the display device 40, and the user of the display device 40.

As illustrated in Fig. 3, in a case where the display device 40 exists on a movement route from a projection region 50A to a projection region 50B, and the display device 40 is in a usable state, the projection control unit 254 causes the display device 40 to display content. Specifically, when the projection device 30 is moving the projection region 50, the projection control unit 254 stops the projection performed by the projection device 30, at a timing at which the projection region 50 overlaps the display device 40, and causes the display device 40 to display content. At this time, the projection control unit 254 may display content while moving the content within the display region 42 in accordance with the driving of the projection device 30, or may display content without moving the content. Then, at a timing at which a region in which the projection region 50 does not overlap the display region 42 is generated again by the driving of the projection device 30, the projection control unit 254 restarts the projection of content that is performed by the projection device 30, and stops the display of content that is performed by the display device 40.

Furthermore, in a case where the display device 40 is in a content undisplayable state, the projection control unit 254 moves the projection region 50 in such a manner that the projection region 50 does not overlap the display region 42 of the display device 40. In other words, the projection control unit 254 moves the projection region 50 to avoid the display device 40.

Here, the undisplayable state refers to a state in which the display device 40 is already used and a state in which content being already displayed on the display device 40 must not to be switched, for example. Furthermore, the projection control unit 254 may determine that the display device 40 is in the undisplayable state, when the display device 40 is merely in a used state. Furthermore, the projection control unit 254 may also regard a case where different users use the projection device 30 and the display device 40, as the undisplayable state. As described above, the projection control unit 254 determines an undisplayable state on the basis of a usage state of the display device 40, content being displayed on the display device 40, and the user of the display device 40.

As illustrated in Fig. 4, in a case where the display device 40 exists on a movement route from the projection region 50A to the projection region 50B, and the display device 40 is in an unusable state, the projection control unit 254 move the projection region 50 to avoid the display device 40.

As described above, in a case where the display device 40 being in the content displayable state exists on the movement route of the projection region 50, by the projection control unit 254 causing the display device 40 to display content, the projection region 50 avoids moving in a vertical direction. Accordingly, the user can continue the viewing of content only by moving a line-of-sight only in a fixed direction, while the projection region 50 is being moved. Furthermore, in a case where the projection region 50 avoids the display device 40, the projection device 30 can move the projection region 50 without disturbing the use of the display device 40 used by another user.

Heretofore, an example of control performed by the projection control unit 254 has been described with reference to Figs. 3 and 4.

### (Storage Unit 260)

The storage unit 260 includes a function of storing data acquired in processing performed by an information processing system. For example, the storage unit 260 stores sensing data acquired by the sensor device 10. Specifically, depth information detected by the depth sensor 110 is input to the storage unit 260 by the control unit 250, and the storage unit 260 stores the depth information. Furthermore, an image captured by the camera 120 is input by the control unit 250 to the storage unit 260, and the storage unit 260 stores the image.

Furthermore, the storage unit 260 stores space information generated by the map generation unit 240.

Note that information stored by the storage unit 260 is not limited to sensing data acquired by the above-described sensor device 10. For example, the storage unit 260 may store data output in the processing of the control unit 250, programs of various applications and the like, data, and the like.

### (3) Projection Device 30

The projection device 30 includes a function of projecting content. On the basis of an instruction related to projection processing of content that has been received from the information processing server 20, the projection device 30 projects the content in an arbitrary direction.

Examples of the projection device 30 include a projector. In an embodiment of the present disclosure, the description will be given of an example in which a drive type projector is used, but the type of a projector is not specifically limited, and a projector of an arbitrary type may be used. For example, a fixed type projector or a whole-sky projector may be used. Note that the number of projection devices 30 is not specifically limited, and an arbitrary number of projection devices 30 may be installed. For example, one projection device 30 may be installed in the same space, or a plurality of projection devices 30 may be installed in the same space.

### (4) Display Device 40

The display device 40 includes a function of displaying content. Examples of the display device 40 include a TV, a display, and the like. Note that the number of display devices 40 is not specifically limited, and an arbitrary number of display devices 40 may be installed. For example, one display device 40 may be installed in the same space, or a plurality of display devices 40 may be installed in the same space.

Heretofore, a configuration example of the information processing system according to an embodiment of the present disclosure has been described with reference to Figs. 2 to 4. Subsequently, an operation example of the information processing system according to the present disclosure will be described.

### <1.3. Operation Example>

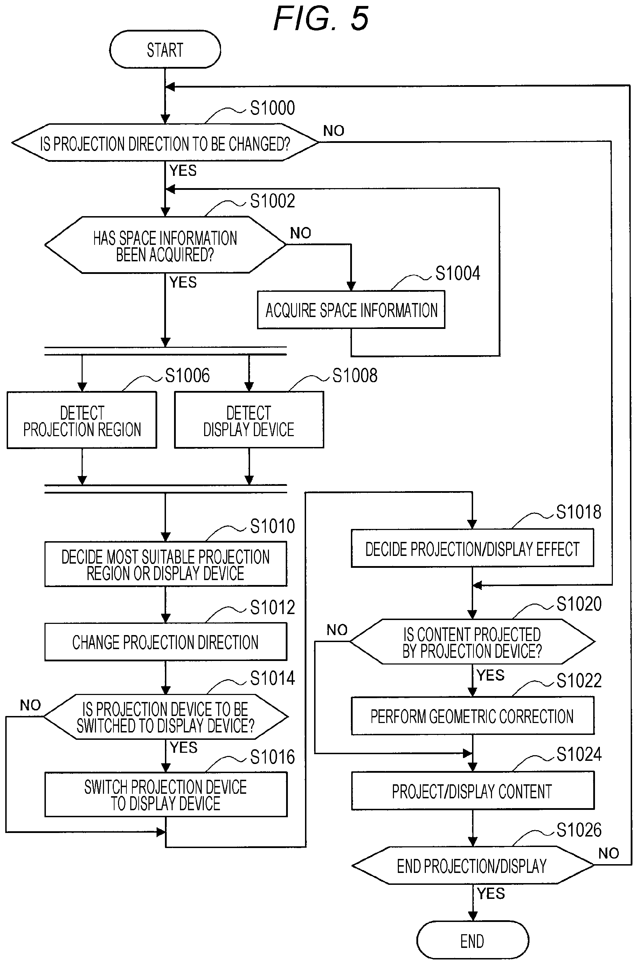

Hereinafter, an operation example of the information processing system according to an embodiment of the present disclosure will be described with reference to Fig. 5. Fig. 5 is a flowchart illustrating an operation example of the information processing system according to an embodiment of the present disclosure.

As illustrated in Fig. 5, first of all, the projection control unit 254 checks whether or not to change a projection direction of content (Step S1000). In a case where a projection direction is not to be changed (Step S1000/NO), the projection control unit 254 does not perform processing related to a change of a projection direction, and advances the processing to processing in Step S1020, which will be described later. In a case where a projection direction is to be changed (Step S1000/YES), for performing processing related to a change of a projection direction, the projection control unit 254 advances the processing to Step S1002.

In the processing related to a change of a projection direction, first of all, the projection control unit 254 checks whether or not space information has been acquired (Step S1002). In a case where space information has not been acquired (Step S1002/NO), the projection control unit 254 performs acquisition processing of space information (Step S1004). After the acquisition processing, the projection control unit 254 checks again whether or not space information has been acquired (Step S1002). Note that Steps S1002 and S1004 are repeated until space information is acquired.

In a case where space information has been acquired (Step S1002/YES), the projection control unit 254 performs processing of detecting a candidate of the projection region 50 that is suitable for projection of content, on the basis of the space information (Step S1006). Furthermore, concurrently with the processing in Step S1006, the projection control unit 254 performs processing of detecting a candidate of the display device 40 that displays content, on the basis of the space information (Step S1008).

From among the detected candidates of the projection region 50 and the detected candidates of the display device 40, the projection control unit 254 decides the projection region 50 more suitable for the projection of content, or the display device 40 more suitable for the display of content (Step S1010).

After deciding a change destination projection region 50 or display device 40 in Step S1010, the projection control unit 254 executes change processing of the projection direction of the projection device 30 (Step S1012)

The projection control unit 254 checks whether or not to switch the projection of content that is performed by the projection device 30, to the display of content that is performed by the display device 40 (Step S1014). In a case where the projection device 30 is to be switched to the display device 40 (Step S1014/YES), the projection control unit 254 switches the projection device 30 to the display device 40 (Step S1016). In a case where the projection device 30 is not to be switched to the display device 40 (Step S1014/NO), the projection control unit 254 does not switch the projection device 30 to the display device 40, and advances the processing to processing in Step S1018.

The projection control unit 254 decides a projection effect or a display effect of content (Step S1018). Then, in accordance with the decided projection effect or display effect, the projection control unit 254 controls projection processing or display processing of content.

After setting a projection effect or a display effect, the projection control unit 254 checks whether or not the projection device 30 displays content (Step S1020). In a case where the projection device 30 projects content (Step S1020/YES), the projection control unit 254 causes the projection device 30 to perform geometric correction (Step S1022). Then, the projection control unit 254 causes the projection device 30 to project content after performing geometric correction (Step S1024).

In a case where the projection device 30 does not project content, and the display device 40 displays content (Step S1020/NO), the projection control unit 254 causes the display device 40 to display content (Step S1024), without performing the processing in Step S1022.

The projection control unit 254 checks whether or not to end the projection or display of content (Step S1026). In a case where the projection or display of content is to be ended (Step S1026/YES), the projection control unit 254 ends the projection or display of content, and ends the processing. Furthermore, in a case where the projection or display of content is not to be ended (Step S1026/NO), the projection control unit 254 repeats the processing from Step S1000, without ending the projection or display of content.

Heretofore, an operation example of an information processing system according to an embodiment of the present disclosure has been described with reference to Fig. 5.

Heretofore, an embodiment of the present disclosure has been described with reference to Figs. 1 to 5. Subsequently, a modified example according to an embodiment of the present disclosure will be described.

### <<2. Modified Example>>

Hereinafter, a modified example of an embodiment of the present disclosure will be described. Note that each of the following modified examples may be applied to an embodiment of the present disclosure by itself, or the following modified examples may be applied to an embodiment of the present disclosure in combination. Furthermore, a modified example may be applied in place of a configuration described in an embodiment of the present disclosure, or may be applied additionally to a configuration described in an embodiment of the present disclosure.

### (1) First Modified Example

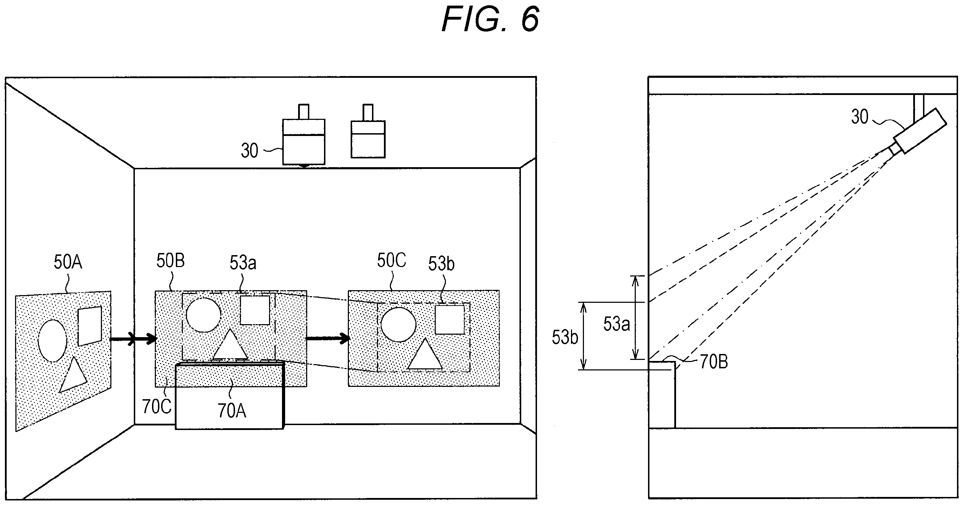

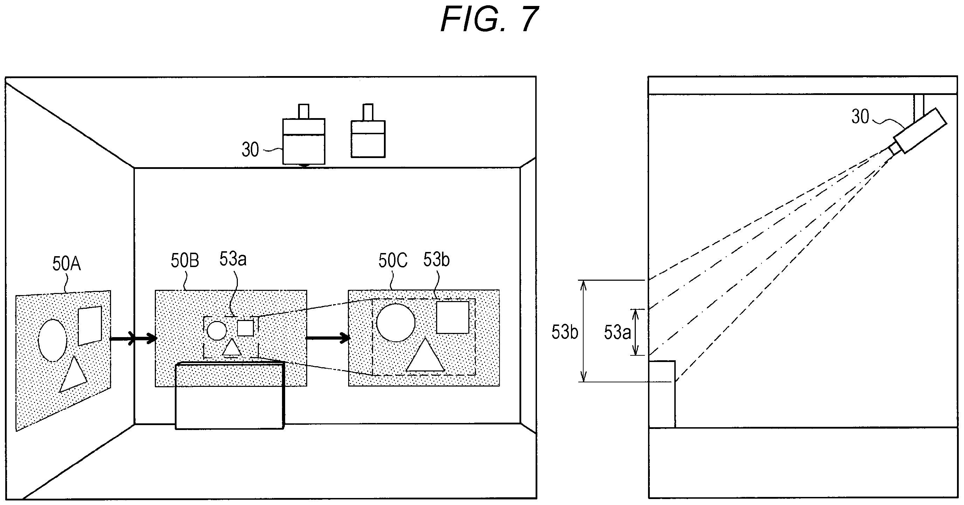

Hereinafter, a first modified example according to an embodiment of the present disclosure will be described with reference to Figs. 6, and 7. Fig. 6 is an explanatory diagram illustrating movement control of content according to an embodiment of the present disclosure. Note that a diagram on the right side of Fig. 6 is a diagram obtained by viewing a space in a diagram on the left side of Fig. 6, from a direction of the projection region 50A. Fig. 7 is an explanatory diagram illustrating size control of content according to an embodiment of the present disclosure. Note that a diagram on the right side of Fig. 7 is a diagram obtained by viewing a space in a diagram on the left side of Fig. 7, from a direction of the projection region 50A.

The projection control unit 254 may select any one of a plurality of partial regions included in the projection region 50, and control at least either a projection size or a projection position of content so as to fall within the selected partial region. Here, the projection position is a position at which content is projected in the projection region 50. For example, as illustrated on the left side of Fig. 6, when the projection control unit 254 moves the projection region 50A to the projection region 50B, a plurality of partial regions is generated in the projection region 50B.

For example, as illustrated in the diagrams on the left and right sides of Fig. 6, the plurality of partial regions corresponds to a partial region 70A, a partial region 70B, and a partial region 70C. The projection control unit 254 may select, from among the plurality of partial regions 70, a partial region in which content is to be projected, on the basis of at least any of the respective normal directions or the sizes. For example, in a case where a partial region in which content is to be projected is selected on the basis of the normal directions, the projection control unit 254 selects a partial region having a normal direction with a higher coincidence degree with the projection direction. Furthermore, in a case where a partial region in which content is to be projected is selected on the basis of the sizes of partial regions, the projection control unit 254 selects a partial region having a larger area. In the diagram illustrated on the left side of Fig. 6, the partial region 70C having the normal direction with a higher coincidence degree with the projection direction, and having a larger area is selected as a partial region in which content is projected. Then, the projection control unit 254 causes content 53a to be projected to fall within the selected partial region. Then, if a partial region becomes nonexistent as in the projection region 50C, the projection control unit 254 returns the projection position of content to the original position, and causes content 53b to be projected. Note that the projection position of the content 53a and the position of the content 53b are different as illustrated on the right side of Fig. 6.

Furthermore, after a partial region in which content is to be projected is selected as described above, the projection control unit 254 may reduce a projection size and then cause content to be projected like the content 53a illustrated on the left side of Fig. 7. Then, if a partial region becomes nonexistent as in the projection region 50C, the projection control unit 254 enlarges a projection size and then causes the content 53b to be projected. Note that the projection size of the content 53a and the projection size of the content 53b are different as illustrated on the right side of Fig. 7.

As described above, the projection control unit 254 can secure the visibility of content by controlling a projection size or a projection position of content after appropriately selecting a partial region.

### (2) Second Modified Example

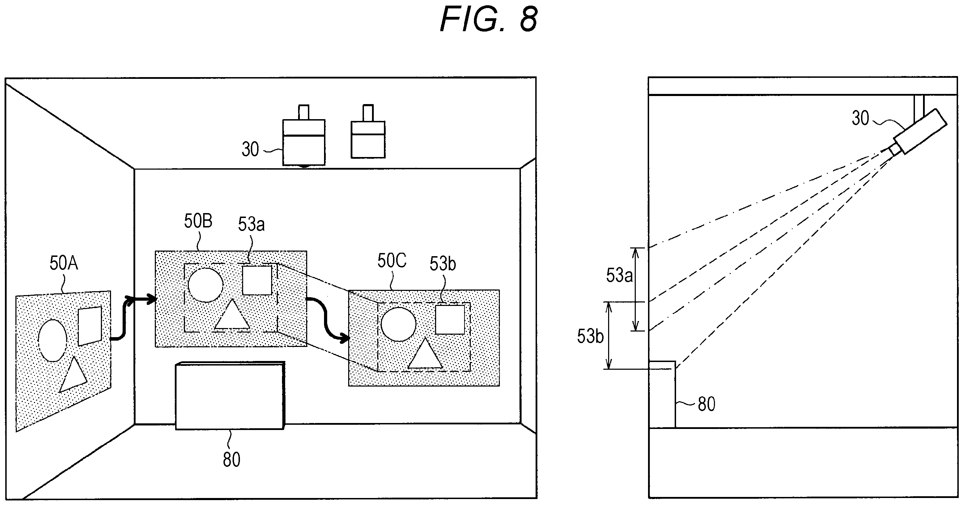

Hereinafter, a second modified example according to an embodiment of the present disclosure will be described with reference to Fig. 8. Fig. 8 is an explanatory diagram illustrating movement control of the projection region 50 according to an embodiment of the present disclosure. Note that a diagram on the right side of Fig. 8 is a diagram obtained by viewing a space in a diagram on the left side of Fig. 8, from a direction of the projection region 50A.

In the drive mode, in a case where an instruction region instructed as a movement destination projection region 50 includes a plurality of partial regions, the projection control unit 254 may perform at least any of the decision of the projection region 50 different from the instruction region, or control of content, in accordance with content. The instruction region is the projection region 50 instructed by the user, an application, or the like. When the projection region 50B illustrated on the left side of Fig. 6 referred to in the above-described first modified example is regarded as an instruction region, the instruction region includes a plurality of partial regions. At this time, the projection control unit 254 may decide a region including a partial region of which a normal direction falls within a predetermined range, as the projection region 50. For example, the projection control unit 254 decides a partial region having a normal direction falling within a range set in such a manner that a coincidence degree between the projection direction and the normal direction becomes a fixed value or more, as the projection region 50. Specifically, it is assumed that the projection control unit 254 decides the partial region 70C illustrated on the left side of Fig. 6, as the projection region 50 different from an instruction region, and causes content to be projected in the projection region 50. This can be said to be the same as a state in which the content 53a is projected in the projection region 50B illustrated on the left side of Fig. 8. Note that the projection region 50 different from the instruction region may partially overlap a partial region included in the instruction region, and needs not overlap the partial region.

In this manner, by projecting the content 53a in the projection region 50B illustrated in Fig. 8, the projection control unit 254 can project the content while avoiding an object 80. Then, the projection control unit 254 may move the projection region 50B to the projection region 50C in such a manner that content can be projected at the same height as content projected in the projection region 50A. Note that the projection position of the content 53a and the projection position of the content 53b are different as illustrated on the right side of Fig. 8.

Note that the projection control unit 254 may decide a region with a small shift from an instruction region, as the projection region 50. For example, the projection control unit 254 evaluates a shift between a candidate of the projection region 50 and the instruction region on the basis of a distance. Specifically, on the basis of space information, the projection control unit 254 detects candidates of the projection region 50, and compares distances between the candidates and the instruction region. After the comparison, the projection control unit 254 preferentially selects a candidate having the small distance, as the projection region 50. As the distance, for example, a distance between a position of a centroid of a candidate of the projection region 50 and a position of a centroid of the instruction region is calculated. Furthermore, as the distance, a distance of a portion in which a distance between an outer periphery frame of a candidate of the projection region 50 and an outer periphery frame of the instruction region becomes smaller may be calculated. Note that a calculation method of the distance is not limited to the above-described example, and the distance may be calculated using an arbitrary method.

As described above, by preferentially selecting a candidate having a smaller distance from the instruction region, as the projection region 50, the projection control unit 254 can decide a region with a smaller shift from the instruction region, as the projection region 50. Therefore, the projection control unit 254 can suppress a movement distance of the projection region 50, and can suppress a movement amount of a line-of-sight of the user. Note that the projection control unit 254 may perform weighting that is based on a relationship between the instruction region and the candidate of the projection region 50, and select the projection region 50 on the basis of the weighting result.

Note that, in a case where the projection control unit 254 does not decide the projection region 50 different from the instruction region, the projection control unit 254 may perform control of content similarly to the above-described first modified example.

As described above, in a case where the projection region 50 includes a plurality of partial regions, by moving the projection region 50 so as not to include a partial region, the projection control unit 254 can enhance the visibility of content.

### (3) Third Modified Example

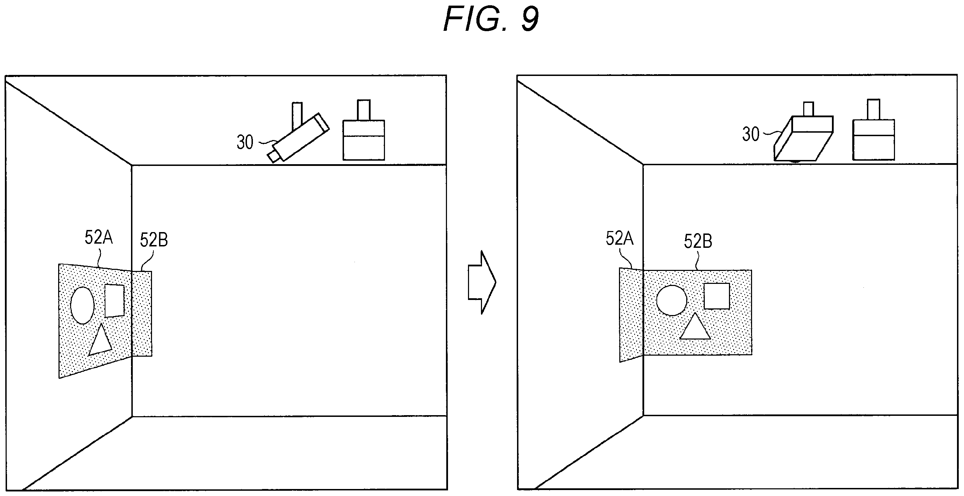

Hereinafter, a third modified example according to an embodiment of the present disclosure will be described with reference to Fig. 9. Fig. 9 is an explanatory diagram illustrating movement control of content between partial regions according to an embodiment of the present disclosure. Note that a diagram on the left side of Fig. 9 illustrates a partial region 52A and a partial region 52B before movement, and a diagram on the right side of Fig. 9 illustrates a partial region 52A and a partial region 52B after movement.

In a case where the projection region 50 includes a plurality of partial regions, the projection control unit 254 may control content to be projected in a partial region having a larger area. For example, as illustrated on the left side of Fig. 9, because an area of the partial region 52A is larger when the partial region 52A and the partial region 52B are compared, the projection control unit 254 causes content to be projected in the partial region 52A. Furthermore, as illustrated on the right side of Fig. 9, because an area of the partial region 52B is larger when the partial region 52A and the partial region 52B after the movement of the projection region 50 are compared, the projection control unit 254 causes content to be projected in the partial region 52B. In this manner, by the projection control unit 254 causing content to be projected in the partial region 52 having a larger area, it becomes possible for the user to easily view the content.

As described above, by projecting content in accordance with a size of an area of a partial region, the projection control unit 254 can enhance the visibility of content while the projection region 50 is being moved.

### (4) Fourth Modified Example

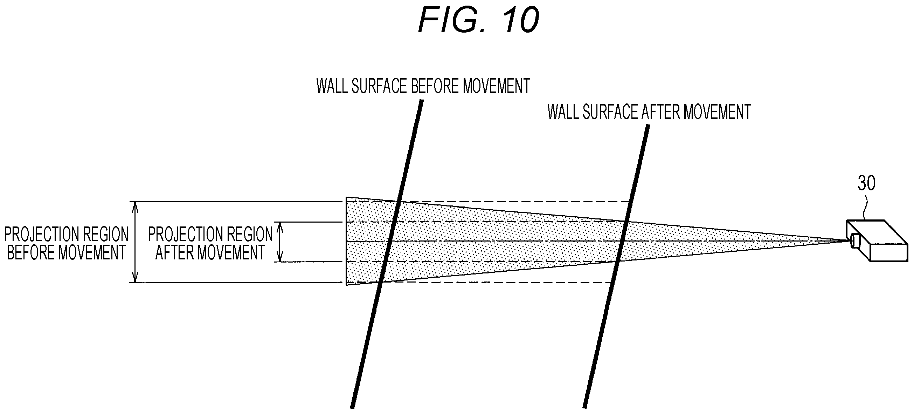

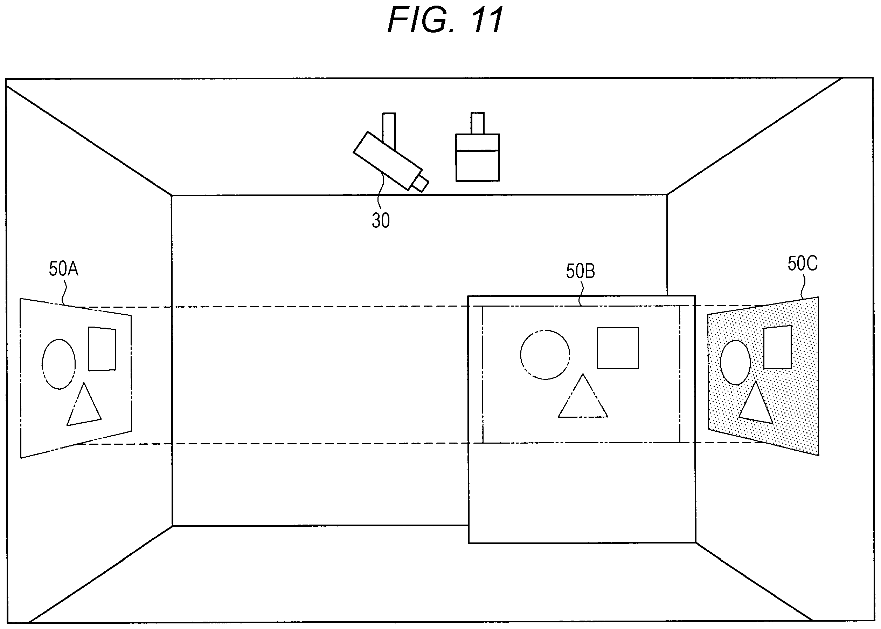

Hereinafter, a fourth modified example according to an embodiment of the present disclosure will be described with reference to Figs. 10 and 11. Fig. 10 is an explanatory diagram illustrating sizes of the projection region 50 before and after the movement according to an embodiment of the present disclosure. Fig. 11 is an explanatory diagram illustrating movement of the projection region 50 in the same size according to an embodiment of the present disclosure.

When moving the projection region 50, the projection control unit 254 may move the projection region 50 in such a manner that a size of the projection region 50 before movement and a size of the projection region 50 after movement become the same, on the basis of space information. For example, as illustrated in Fig. 10, it is assumed that the projection control unit 254 moves the projection region 50 projected on a certain wall surface, to another wall surface. The size of the projection region 50 becomes larger as a distance from the projection device 30 to the projection region 50 becomes farther. Furthermore, a distance from the projection device 30 to the projection region 50 during the movement of the projection region 50 is not always constant. Accordingly, the size of the projection region 50 during the movement repeats changing in accordance with a distance from the projection device 30. This greatly affects the visibility of content. In view of the foregoing, as illustrated in Fig. 11, the projection control unit 254 moves the projection region 50 in such a manner that the sizes of the projection region 50A before movement, the projection region 50B during movement, and the projection region 50C after movement become the same. At this time, by expanding or reducing the projection region 50 in accordance with a distance between the projection device 30 and the projection region 50, the projection control unit 254 keeps the size of the projection region 50 during movement in the same size. Note that the projection control unit 254 may perform control in such a manner that only the sizes of the projection region 50A before movement and the projection region 50C after movement become the same. At this time, the projection control unit 254 needs not control the size of the projection region 50B during movement.

As described above, the projection control unit 254 can enhance the visibility of content by controlling the size of the projection region 50.

### (5) Fifth Modified Example

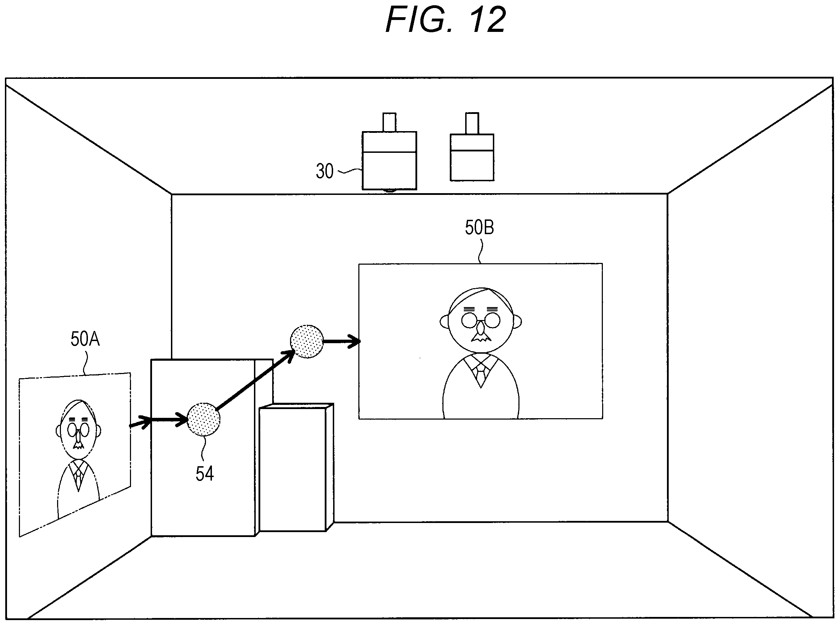

Hereinafter, a fifth modified example according to an embodiment of the present disclosure will be described with reference to Fig. 12. Fig. 12 is an explanatory diagram illustrating an object representing the movement of the projection region 50 according to an embodiment of the present disclosure.

When moving the projection region 50, the projection control unit 254 may project an object 54 indicating that the projection region 50 is being moved, in place of content. For example, in a case where it is undesirable to cause the user to view a content unstable state due to the movement (for example, a state in which content is blurred), the projection control unit 254 projects the object 54 in place of the projection region 50A, and moves the object 54. By moving the object 54, the projection control unit 254 can indicate that the projection region 50 is being moved. When the projection control unit 254 ends the movement of the object 54, the projection control unit 254 switches the object 54 to the projection region 50B, and projects the projection region 50B. Therefore, the projection control unit 254 can avoid causing the user to view blurring or the like of content generated by the driving of the projection device 30. Furthermore, by projecting the object 54, the projection control unit 254 can indicate a movement route, and prevent the user from losing sight of a projection position.

Note that the shape of the object 54 projected in place of the projection region 50 is not limited to the shape illustrated in Fig. 12, and the object 54 having an arbitrary shape may be projected.

As described above, by projecting the object 54 in place of the projection region 50, the projection control unit 254 can enhance the visibility of content while the projection region 50 is being moved.

### (6) Sixth Modified Example

Hereinafter, a sixth modified example according to an embodiment of the present disclosure will be described.

The projection control unit 254 may change a speed at which the projection region 50 is moved, in accordance with content. For example, in a case where content of which information display while the projection region 50 is being moved is not important, the projection control unit 254 increases a movement speed of the projection region 50. The content of which information display is not important is static content in which displayed information does not change during the movement of the projection region 50, for example. The static content is a still image such as a photograph, a text, content not set to change in content in accordance with movement, or the like, for example. Therefore, because a movement speed of the projection region 50 increases, the projection control unit 254 can avoid causing the user to view unnecessary information.

Furthermore, in a case where content of which information display while the projection region 50 is being moved is important, the projection control unit 254 decreases a movement speed of the projection region 50. The content of which information display is important is dynamic content in which displayed information changes in accordance with the movement of the projection region 50, for example. The dynamic content is, for example, content being a video such as animation, or content indicating that the projection region 50 is being moved. Furthermore, content being in a state of operating by combining information display and an operation, like a user interface (UI), is content for which it is important that projection content is always visible. Specific examples of the UI include a system setting such as a screen setting, an agent application, an application that presents information while tracking a line-of-sight, and the like. Therefore, because a movement speed of the projection region 50 decreases, the projection control unit 254 can cause the user to easily view content.

As described above, by changing the movement speed of the projection region 50 in accordance with content, the projection control unit 254 can enhance the visibility of content while the projection region 50 is being moved.

### (7) Seventh Modified Example

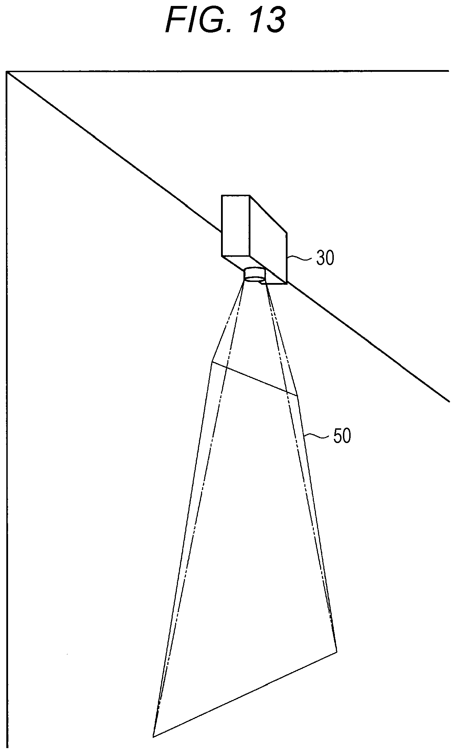

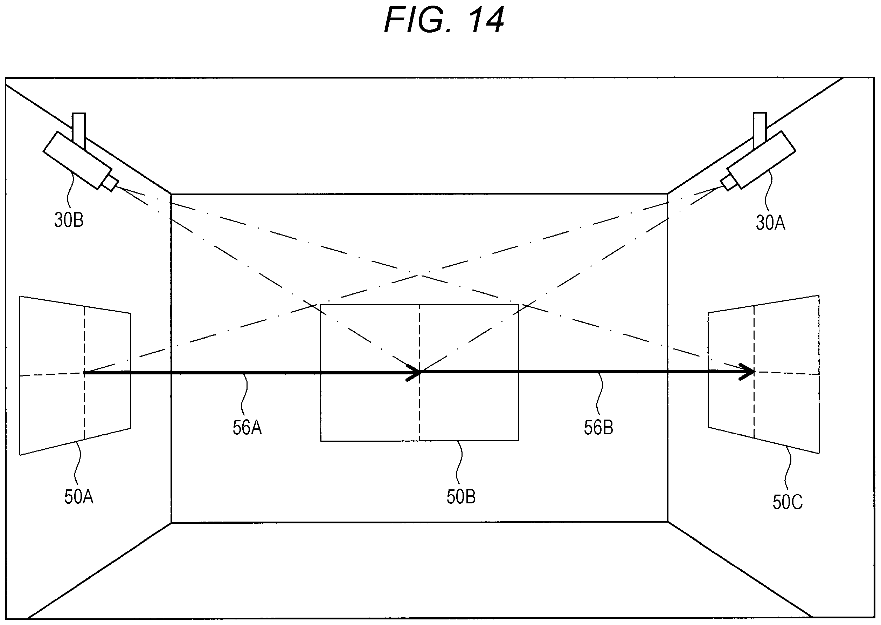

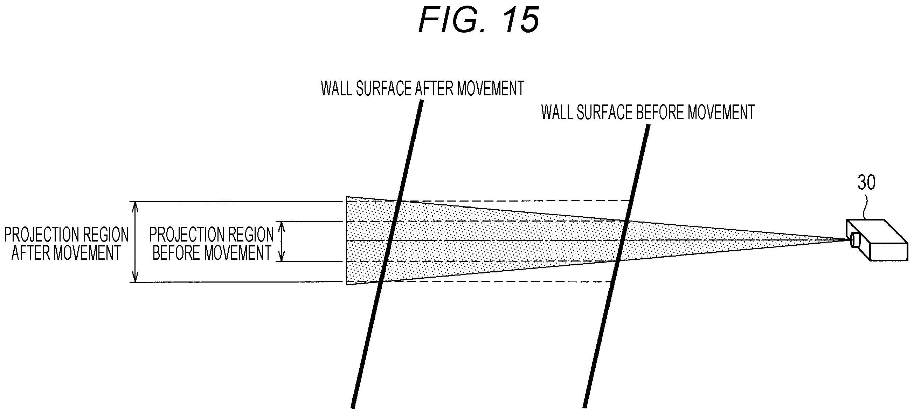

Hereinafter, a seventh modified example according to an embodiment of the present disclosure will be described with reference to Figs. 13 to 15. Fig. 13 is an explanatory diagram illustrating projection in which the resolution of content declines according to an embodiment of the present disclosure. Fig. 14 is an explanatory diagram illustrating handover of projection of content according to an embodiment of the present disclosure. Fig. 15 is an explanatory diagram illustrating sizes of the projection region 50 before and after the movement according to an embodiment of the present disclosure.

In a case where a plurality of projection devices 30 exists, the projection control unit 254 may switch a projection device 30 that projects content, on the basis of space information. When moving the projection region 50, the projection control unit 254 may perform control of handing over projection processing of content from a projection device 30 to another projection device 30, in accordance with the visibility of content. For example, in a case where the visibility of content declines by the projection device 30 moving the projection region 50, the projection control unit 254 hands over projection processing to another projection device 30 that can project the content without causing a decline in visibility.

For example, depending on an installation position of the projection device 30, an angle formed by the projection direction and the projection region 50, a distance from the projection device 30 to the projection region 50, or the like, in some cases, the resolution of content declines, and the visibility of content declines. Specifically, as illustrated in Fig. 13, in a case where an angle formed by the projection direction and the projection region 50 is small, the resolution of content declines, and the visibility of content deteriorates. Furthermore, the shape of the projection region 50 is deformed, and the visibility of content further deteriorates.

In view of the foregoing, as illustrated in Fig. 14, when moving the projection region 50 from the projection region 50A to the projection region 50C, the projection control unit 254 causes a projection device 30A to project content in a section 56A, and causes a projection device 30B to project content in a section 56B. When handing over projection processing, if content being projected by the projection device 30A moves to the vicinity of the projection region 50B, the projection control unit 254 causes the projection device 30B to project the same content in such a manner as to be superimposed on the content being projected by the projection device 30A. Then, by fading out the content by adjusting luminance or the like of the content being projected by the projection device 30A, the projection control unit 254 more naturally hands over the projection processing from the projection device 30A to the projection device 30B. Therefore, the projection control unit 254 can move the projection region 50 without causing a decline in the visibility of content. Note that the projection control unit 254 hands over projection processing to a projection device 30 that makes larger an angle formed by the projection direction and the projection region 50.

Furthermore, as illustrated in Fig. 15, it is assumed that the projection control unit 254 moves the projection region 50 from a certain wall surface to another wall surface. In the example illustrated in Fig. 15, because a distance between the projection device 30 and the projection region 50 becomes farther by moving the projection region 50, a size of the projection region becomes larger. Furthermore, if the projection sizes of content are made the same before and after the movement, because the projection size of content in the projection region 50 after movement becomes smaller, the resolution of content declines and the visibility deteriorates as well. In view of the foregoing, as described above, by handing over projection processing to a projection device 30 closer to the projection region 50 after movement, the projection control unit 254 can prevent a decline in resolution and also improve the visibility.

As described above, in a case where a plurality of projection devices 30 exists, in a situation in which the visibility of content declines, by handing over projection processing of content between the plurality of projection devices 30, the projection control unit 254 can improve the visibility of content.

### (8) Eighth Modified Example

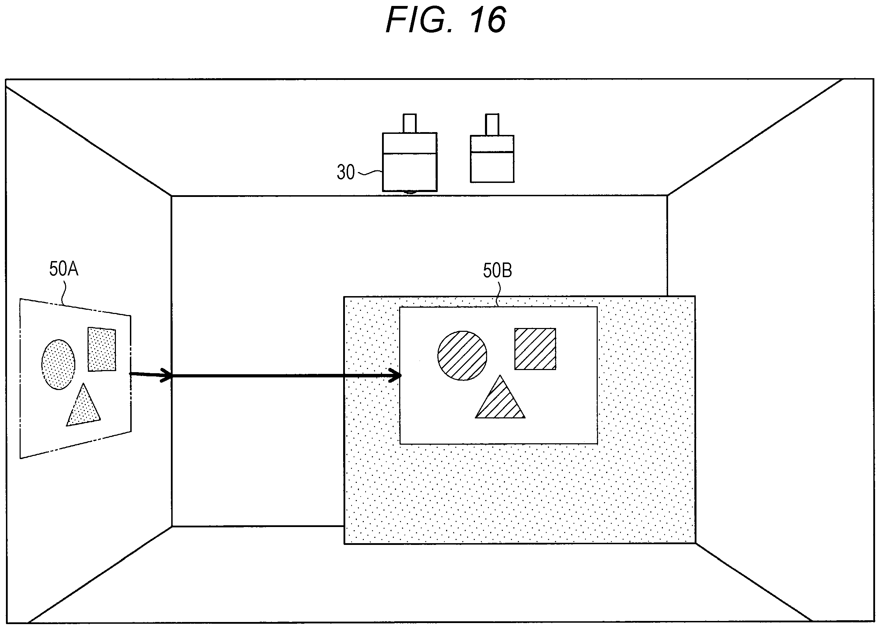

Hereinafter, an eighth modified example according to an embodiment of the present disclosure will be described with reference to Fig. 16. Fig. 16 is an explanatory diagram illustrating a change in luminance and color of content according to an embodiment of the present disclosure.

In accordance with a movement speed of the projection region 50, the projection control unit 254 may project content by changing at least any setting of a setting of luminance of content or a setting related to color. The setting related to color is a setting of saturation of content, for example. The color of the projection region 50 is not always the same, and sometimes varies like the projection region 50A and the projection region 50B illustrated in Fig. 16. At this time, if the settings of luminance and saturation in the projection region 50A and the projection region 50B are the same, the visibility of content in both of the projection regions 50 cannot be kept constant. In view of the foregoing, the projection control unit 254 may change the settings of luminance and saturation in accordance with a movement speed of the projection region 50. For example, as a movement speed of the projection region becomes higher, the projection control unit 254 sets a setting value of at least one of luminance or saturation to a higher value.

Specifically, in accordance with a speed ratio of a current movement speed with respect to a predetermined movement speed of the projection region 50, the projection control unit 254 calculates a luminance value and a saturation value that are set during the movement of the projection region 50. The luminance value set during the movement of the projection region 50 can be obtained by calculating, for example, (speed ratio × constant × (input luminance value - intermediate luminance value) + intermediate luminance value). As the constant, an arbitrary value may be set by the user. The input luminance value is a luminance value of content to be projected. The intermediate luminance value is an intermediate value of a luminance value of the entire content to be projected. Furthermore, a saturation value set during the movement of the projection region 50 can be obtained by calculating (speed ratio × constant × input saturation value). The input saturation value is a saturation value of content to be projected. Then, the projection control unit 254 changes at least one value of the calculated luminance value or saturation value set during the movement, to a higher value.

As described above, by changing a setting of a luminance value or a saturation value of content, to a higher value in accordance with a movement speed, the projection control unit 254 can enhance the visibility of content while the projection region is being moved.

### (9) Ninth Modified Example

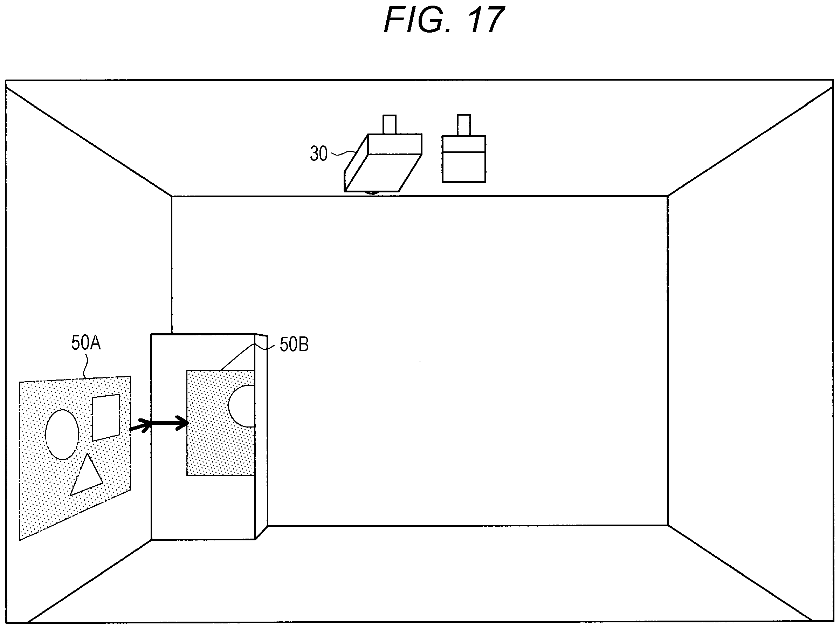

Hereinafter, a ninth modified example according to an embodiment of the present disclosure will be described with reference to Fig. 17. Fig. 17 is an explanatory diagram illustrating partial display of the projection region 50 according to an embodiment of the present disclosure.

The projection control unit 254 may partially project content in the projection region 50, for example. For example, as illustrated in Fig. 17, in a case where the projection region 50A is moved to the projection region 50B having an area smaller than the projection region 50A, the projection control unit 254 may partially project content in the projection region 50B while maintaining a projection size of the content. Therefore, even if the size of the projection region 50 changes between before and after the movement of the projection region 50, the projection size of content does not change. Accordingly, the projection control unit 254 can cause the user to easily view content as compared with a case where the projection size of content changes in accordance with a change in the size of the projection region 50.

As described above, by partially projecting content in the projection region 50, the projection control unit 254 can enhance the visibility of content while the projection region 50 is being moved.

### (10) Tenth Modified Example

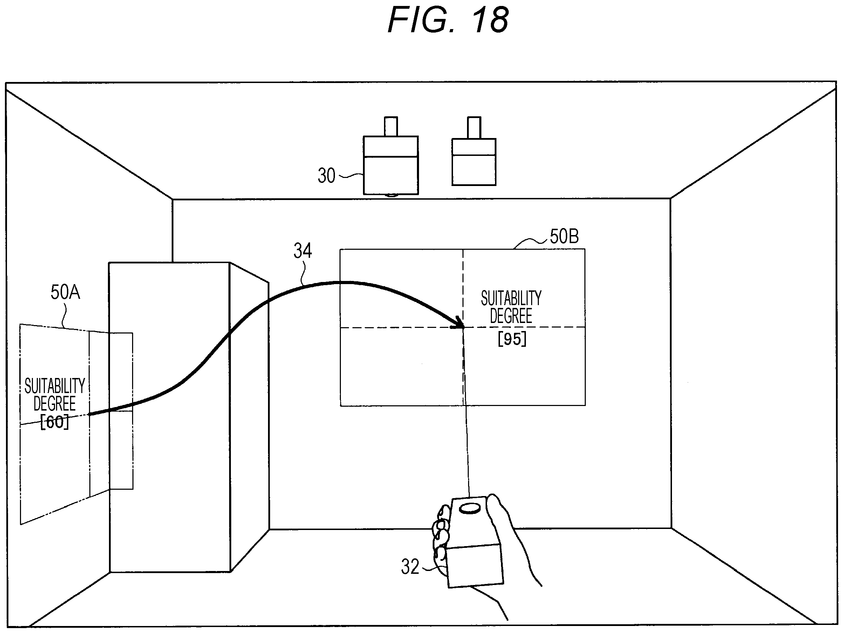

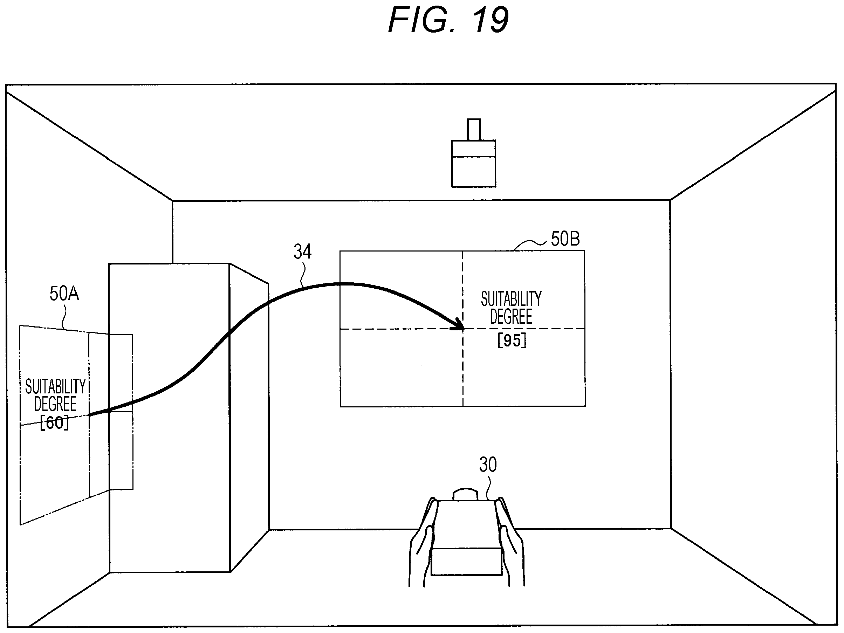

Hereinafter, a tenth modified example according to an embodiment of the present disclosure will be described with reference to Figs. 18 and 19. Fig. 18 is an explanatory diagram illustrating information regarding the projection region 50 when a projection direction is changed using a pointing device according to an embodiment of the present disclosure. Fig. 19 is an explanatory diagram illustrating information regarding the projection region 50 when a projection direction is manually changed according to an embodiment of the present disclosure.

The projection control unit 254 may project a suitability degree in the projection region 50. For example, the description will be given of a case where the user inputs, using a pointing device 32, an instruction to change a projection direction. As illustrated in Fig. 18, first of all, the projection control unit 254 causes the projection device 30 to project a suitability degree in the current projection region 50A. When the user inputs the instruction using the pointing device 32, the projection control unit 254 causes the projection device 30 to move the projection region 50 along a movement route 34 of the pointing device. After the movement of the projection region 50, the projection control unit 254 causes the projection device 30 to project a suitability degree in the projection region 50B after the movement.

Furthermore, the description will be given of a case where the user inputs an instruction to change a projection direction, by manually moving the projection device 30. As illustrated in Fig. 19, first of all, the projection control unit 254 causes the projection device 30 to project a suitability degree in the current projection region 50A. When the user manually changes the projection direction of the projection device 30, the projection control unit 254 causes the projection device 30 to move the projection region 50 along the movement route 34. After the movement of the projection region 50, the projection control unit 254 causes the projection device 30 to project a suitability degree in the projection region 50B after the movement.

Note that the projection control unit 254 may project, as a suitability degree, an evaluation value, an area of the projection region 50, an inclination degree of the projection region 50, or the like.

Furthermore, the projection control unit 254 may cause the projection device 30 to sequentially project a suitability degree in accordance with the projection region 50 existing on the movement route 34.

Furthermore, a means for the user inputting an instruction to change a projection direction is not limited to the above-described example, and an arbitrary means may be used. For example, the user may input an instruction to change a projection direction, using a remote controller (D-pad), gesture, a change of a line-of-sight, or the like. Furthermore, an instruction to change a projection direction may be automatically input by a system.

As described above, by the projection control unit 254 causing the projection device 30 to project a suitability degree in the projection region 50, the user can search for the projection region 50 most appropriate for the viewing of content, on the basis of the suitability degree. Accordingly, the projection control unit 254 can enhance the convenience of the user in searching for the projection region 50.

Heretofore, modified examples according to an embodiment of the present disclosure have been described with reference to Figs. 6 to 19. Subsequently, a hardware configuration of the information processing device according to an embodiment of the present disclosure will be described.

### <<3. Hardware Configuration Example>>

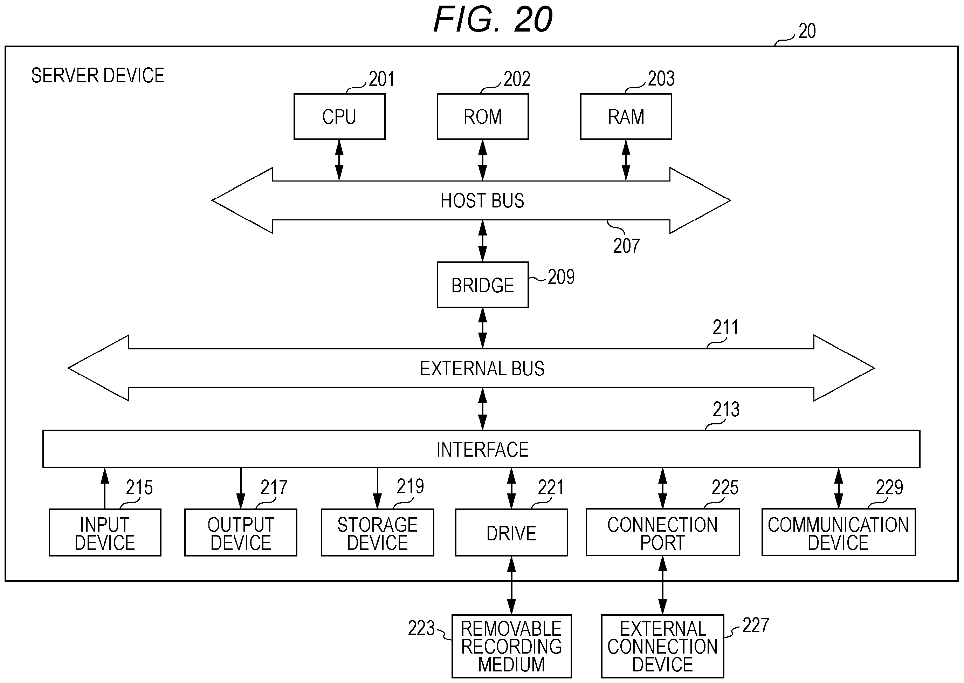

Hereinafter, a hardware configuration example of the information processing device according to an embodiment of the present disclosure will be described with reference to Fig. 20. Fig. 20 is a block diagram illustrating a hardware configuration example of the information processing server 20 according to an embodiment of the present disclosure. As illustrated in Fig. 20, the information processing server 20 includes, for example, a CPU 101, a ROM 103, a RAM 105, a host bus 107, a bridge 109, an external bus 111, and an interface 113. Furthermore, the information processing server 20 includes an input device 115, an output device 117, a storage device 119, a drive 121, a removable recording medium 123, a connection port 125, an external connection device 127, and a communication device 129. Note that the hardware configuration illustrated in Fig. 20 is an example, and a part of the components may be omitted. Furthermore, the hardware configuration may further include a component other than the components illustrated in Fig. 20.

### (CPU 101, ROM 103, RAM 105)

The CPU 101 functions as an arithmetic processing unit or a control device, for example, and controls all or a part of the operations of each component on the basis of various programs recorded in the ROM 103, the RAM 105, the storage device 119, or the removable recording medium 123. The ROM 103 is a means for storing programs to be read by the CPU 101, data to be used for calculation, and the like. The RAM 105 temporarily or permanently stores programs to be read by the CPU 101, various parameters appropriately changing in executing the programs, and the like, for example. These components are connected to each other by the host bus 107 including a CPU bus and the like. In cooperation with software, the CPU 101, the ROM 103, and the RAM 105 can implement the functions of the control unit 250 described with reference to Fig. 2, for example.

### (Host Bus 107, Bridge 109, External Bus 111, Interface 113)

The CPU 101, the ROM 103, and the RAM 105 are connected to each other via the host bus 107 that can perform high-speed data transmission, for example. On the other hand, the host bus 107 is connected to the external bus 111 having relatively slow data transmission speed, via the bridge 109, for example. Furthermore, the external bus 111 is connected with various components via the interface 113.

### (Input Device 115)

As the input device 115, for example, a mouse, a keyboard, a touch panel, a button, a switch, a lever, or the like is used. Moreover, as the input device 115, a remote controller that can transmit a control signal using infrared rays or other radio waves is sometimes used. Furthermore, the input device 115 includes a voice input device such as a microphone. The input device 115 can implement the functions of the sensor device 10 described with reference to Fig. 2, for example.

### (Output Device 117)

The output device 117 includes a display device such as a cathode ray tube (CRT) display device or a liquid crystal display (LCD) device, for example. Furthermore, the output device 117 includes a display device such as a projector device, an organic light emitting diode (OLED) device, and a lamp. Furthermore, the output device 117 includes a voice output device such as a speaker and headphones. The output device 117 can implement the functions of the projection device 30 and the display device 40 described with reference to Fig. 2, for example.

### (Storage Device 119)

The storage device 119 is a device for storing various types of data. As the storage device 119, for example, a magnetic storage device such as a hard disk drive (HDD), a semiconductor storage device, an optical storage device, a magnetooptical storage device, or the like is used. The storage device 119 can implement the functions of the storage unit 260 described with reference to Fig. 2, for example.

### (Drive 121)

The drive 121 is a device that reads out information recorded in the removable recording medium 123 such as a magnetic disk, an optical disk, a magnetooptical disk, or a semiconductor memory, for example, or writes information into the removable recording medium 123.

### (Removable Recording Medium 123)

The removable recording medium 123 is, for example, a DVD medium, a Blu-ray (registered trademark) medium, an HD-DVD medium, various semiconductor storage media, or the like. It should be appreciated that the removable recording medium 123 may be, for example, an IC card equipped with a noncontact IC chip, an electronic device, or the like.

### (Connection Port 125)

The connection port 125 is a port for connecting the external connection device 127, such as a universal serial bus (USB) port, an IEEE1394 port, a small computer system interface (SCSI) port, an RS-232C port, or an optical audio terminal, for example.

### (External Connection Device 127)

The external connection device 127 is, for example, a printer, a portable music player, a digital camera, a digital video camera, an IC recorder, or the like.

### (Communication Device 129)

The communication device 129 is a communication device for connecting to a network, and is, for example, a communication card for a wired or wireless LAN, Bluetooth (registered trademark), or a Wireless USB (WUSB), a router for optical communication, a router for Asymmetric Digital Subscriber Line (ADSL), a modem for various types of communication, or the like.

Heretofore, a hardware configuration example of the information processing device according to an embodiment of the present disclosure has been described with reference to Fig. 20.

### <<4. Conclusion>>

As described above, the projection control unit 254 of the information processing device according to an embodiment of the present disclosure decides the projection region 50 in accordance with whether or not the projection device 30 is in the drive mode of moving the projection region 50 in which content is to be projected, on the basis of space information regarding a space in which content can be projected. Then, the projection control unit 254 controls projection processing of content in the projection region 50.

By controlling projection processing of content in the projection region 50, the information processing device can provide content to the user after adding an effect that makes the content more easily viewable for the user, to the content, even while the projection direction of the content is be moved.

As a result, an information processing device, an information processing method, and a recording medium that are novel and improved, and can further enhance the visibility of content while a projection region is being moved can be provided.

Heretofore, a preferred embodiment of the present disclosure has been described in detail with reference to the attached drawings, but the technical scope of the present disclosure is not limited to this example. It should be appreciated that a person who has general knowledge in the technical field of the present disclosure can conceive various change examples and modified examples within the scope of the technical idea described in the appended claims, and these change examples and modified examples are construed as naturally falling within the technical scope of the present disclosure.

Furthermore, the processes described in this specification using the flowcharts and the sequence diagrams need not be always executed in the orders illustrated in the drawings. Some processing steps may be concurrently executed. Furthermore, an additional processing step may be employed, and a part of the processing steps may be omitted.

Note that the following configurations also fall within the technical scope of the present disclosure.
(1) An information processing device including:
   a projection control unit configured to decide a projection region in accordance with whether or not a projection device is in an operation mode of moving a projection region in which content is to be projected, on the basis of space information regarding a space in which the projection device can project the content, and control projection processing of the content in the decided projection region.
(2) The information processing device according to (1) described above, in which, in the operation mode, in a case where an instruction region instructed as the projection region being a movement destination includes a plurality of partial regions, the projection control unit performs at least any of decision of the projection region different from the instruction region, or control of the content, in accordance with the content.
(3) The information processing device according to (2) described above, in which the projection control unit decides a region including the partial region of which a normal direction falls within a predetermined range, as the projection region.
(4) The information processing device according to claim (3) described above, in which the projection control unit decides a region with a small shift from the instruction region, as the projection region.
(5) The information processing device according to claim (2) described above, in which the projection control unit selects any one of the plurality of partial regions included in the projection region, and controls at least either a projection size or a projection position of the content so as to fall within the selected partial region.
(6) The information processing device according to (5) described above, in which the projection control unit selects the partial region in which the content is to be projected, on the basis of at least either a normal direction or a size of each of the plurality of partial regions included in the projection region.
(7) The information processing device according to (6) described above, in which each of the plurality of partial regions included in the projection region is a region of which a normal direction falls within a predetermined range.
(8) The information processing device according to any one of (1) to (7) described above, in which, when moving the projection region, the projection control unit makes a size of the projection region before movement and a size of the projection region after movement same, on the basis of the space information.
(9) The information processing device according to any one of (1) to (8) described above, in which, when moving the projection region, the projection control unit projects an object indicating that the projection region is being moved, in place of the content.
(10) The information processing device according to any one of (1) to (9) described above, in which the projection control unit changes a speed at which the projection region is moved, in accordance with the content.
(11) The information processing device according to any one of (1) to (10) described above, in which, in a case where a display device that displays the content exists on a movement route of the projection region, the projection control unit controls projection processing of the content in accordance with a state of the display device.
(12) The information processing device according to (11) described above, in which, in a case where the display device is in a displayable state of the content, the projection control unit stops projection of the content that is performed by the projection device, and causes the display device to display the content.
(13) The information processing device according to (11) or (12) described above, in which, in a case where the display device is in an undisplayable state of the content, the projection control unit moves the projection region in such a manner that the projection region does not overlap a display region of the display device.
(14) The information processing device according to any one of (1) to (13) described above, in which, in a case where a plurality of the projection devices exists, the projection control unit switches the projection device that projects the content, on the basis of the space information.
(15) The information processing device according to (14) described above, in which, when moving the projection region, the projection control unit performs control of handing over projection processing of the content from the projection device to the different projection device, in accordance with visibility of the content.
(16) The information processing device according to any one of (1) to (15) described above, in which, in accordance with a movement speed of the projection region, the projection control unit projects the content by changing at least any setting of a setting of luminance of the content or a setting related to color.
(17) An information processing method executed by a processor, the information processing method including:
   deciding a projection region in accordance with whether or not a projection device is in an operation mode of moving a projection region in which content is to be projected, on the basis of space information regarding a space in which the projection device can project the content, and controlling projection processing of the content in the decided projection region.
(18) A recording medium recording a program for causing a computer to function as:
   a projection control unit configured to decide a projection region in accordance with whether or not a projection device is in an operation mode of moving a projection region in which content is to be projected, on the basis of space information regarding a space in which the projection device can project the content, and control projection processing of the content in the decided projection region.

### REFERENCE SIGNS LIST

- 10: Sensor device
- 20: Information processing server
- 30: Projection device
- 40: Display device
- 110: Depth sensor
- 120: Camera
- 230: I/F unit
- 240: Map generation unit
- 250: Control unit
- 252: Setting unit
- 254: Projection control unit
- 260: Storage unit

## Claims

1. An information processing device comprising:
a projection control unit configured to decide a projection region in accordance with whether or not a projection device is in an operation mode of moving a projection region in which content is to be projected, on a basis of space information regarding a space in which the projection device can project the content, and control projection processing of the content in the decided projection region.

2. The information processing device according to claim 1, wherein, in the operation mode, in a case where an instruction region instructed as the projection region being a movement destination includes a plurality of partial regions, the projection control unit performs at least any of decision of the projection region different from the instruction region, or control of the content, in accordance with the content.

3. The information processing device according to claim 2, wherein the projection control unit decides a region including the partial region of which a normal direction falls within a predetermined range, as the projection region.

4. The information processing device according to claim 3, wherein the projection control unit decides a region with a small shift from the instruction region, as the projection region.

5. The information processing device according to claim 2, wherein the projection control unit selects any one of the plurality of partial regions included in the projection region, and controls at least either a projection size or a projection position of the content so as to fall within the selected partial region.

6. The information processing device according to claim 5, wherein the projection control unit selects the partial region in which the content is to be projected, on a basis of at least either a normal direction or a size of each of the plurality of partial regions included in the projection region.

7. The information processing device according to claim 6, wherein each of the plurality of partial regions included in the projection region is a region of which a normal direction falls within a predetermined range.

8. The information processing device according to claim 1, wherein, when moving the projection region, the projection control unit makes a size of the projection region before movement and a size of the projection region after movement same, on a basis of the space information.

9. The information processing device according to claim 1, wherein, when moving the projection region, the projection control unit projects an object indicating that the projection region is being moved, in place of the content.

10. The information processing device according to claim 1, wherein the projection control unit changes a speed at which the projection region is moved, in accordance with the content.

11. The information processing device according to claim 1, wherein, in a case where a display device that displays the content exists on a movement route of the projection region, the projection control unit controls projection processing of the content in accordance with a state of the display device.

12. The information processing device according to claim 11, wherein, in a case where the display device is in a displayable state of the content, the projection control unit stops projection of the content that is performed by the projection device, and causes the display device to display the content.

13. The information processing device according to claim 11, wherein, in a case where the display device is in an undisplayable state of the content, the projection control unit moves the projection region in such a manner that the projection region does not overlap a display region of the display device.

14. The information processing device according to claim 1, wherein, in a case where a plurality of the projection devices exists, the projection control unit switches the projection device that projects the content, on a basis of the space information.

15. The information processing device according to claim 14, wherein, when moving the projection region, the projection control unit performs control of handing over projection processing of the content from the projection device to the different projection device, in accordance with visibility of the content.

16. The information processing device according to claim 1, wherein, in accordance with a movement speed of the projection region, the projection control unit projects the content by changing at least any setting of a setting of luminance of the content or a setting related to color.

17. An information processing method executed by a processor, the information processing method comprising:
deciding a projection region in accordance with whether or not a projection device is in an operation mode of moving a projection region in which content is to be projected, on a basis of space information regarding a space in which the projection device can project the content, and controlling projection processing of the content in the decided projection region.

18. A recording medium recording a program for causing a computer to function as:
a projection control unit configured to decide a projection region in accordance with whether or not a projection device is in an operation mode of moving a projection region in which content is to be projected, on a basis of space information regarding a space in which the projection device can project the content, and control projection processing of the content in the decided projection region.
